# EUROPEAN PATENT APPLICATION

(11) **EP 4 190 623 A1**
(43) Date of publication of application: **07.06.2023**
(21) Application number: 21852687.9
(22) Date of filing: 03.08.2021
(51) Int. Cl.: B60L 15/20, F16H 59/42, F16H 59/68, F16H 63/50, F16H 61/04, F16H 61/68

(54) **CONTROL DEVICE**

(30) Priority: 03.08.2020 JP 2020131745
(71) Applicant: AISIN CORPORATION, Aichi 448-8650 (JP)
(72) Inventor: TANAKA, Masayuki, Kariya-shi, Aichi 448-8650 (JP); OBOKATA, Yuya, Kariya-shi, Aichi 448-8650 (JP)
(74) Representative: TBK
(86) International application number: PCT/JP2021/028756
(87) International publication number: WO 2022/030484

(57) **Abstract**

When a control device allows a shift speed formed by a transmission to transition from a pre-shift shift speed to a post-shift shift speed by performing engagement of an engagement-side engagement device and disengagement of a disengagement-side engagement device, the control device allows a torque phase in which a torque-sharing ratio between the engagement-side engagement device and the disengagement-side engagement device changes to proceed by performing engagement control in which transmission torque of the engagement-side engagement device is allowed to gradually increase. During proceeding of the torque phase, the control device controls output torque of a rotating electrical machine such that a rotational speed of an input member approaches a target rotational speed determined based on a pre-shift synchronous rotational speed.

## Description

### TECHNICAL FIELD

The present invention relates to a control device whose control target is a vehicle drive device in which a transmission is configured to be able to form a plurality of shift speeds.

### BACKGROUND ART

An example of a control device such as that described above is disclosed in JP 2011-94757 A (Patent Literature 1). Reference signs shown in parentheses in description of BACKGROUND ART below are those of Patent Literature 1. In Patent Literature 1, a vehicle drive device (1) that is a control target of a control device (2) includes a transmission (13) that includes a plurality of engagement devices and can form a plurality of shift speeds, in a power transmission path between an input member (I) that is drive-coupled to a rotating electrical machine (12) and an output member (O) that is drive-coupled to wheels (17). The control device (2) is configured such that when the control device (2) allows a shift speed formed by the transmission (13) to transition from a pre-shift shift speed to a post-shift shift speed by performing engagement of an engagement-side engagement device (Ee) and disengagement of a disengagement-side engagement device (Er), the control device (2) allows a torque phase (Pt) to proceed such that an instruction value of hydraulic pressure supplied to the engagement-side engagement device (Ee) increases at a certain change rate, and allows output torque of the rotating electrical machine (12) to change at a constant change rate in the torque phase (Pt). By thus changing the output torque of the rotating electrical machine (12), torque fluctuations of the output member (O) in the torque phase (Pt) can be suppressed.

### CITATIONS LIST

### PATENT LITERATURE

Patent Literature 1: JP 2011-94757 A

### SUMMARY OF INVENTION

### TECHNICAL PROBLEMS

Meanwhile, in the torque phase, a torque ratio which is a ratio of torque of the input member to torque of the output member changes from a torque ratio determined based on a transmission gear ratio of the pre-shift shift speed to a torque ratio determined based on a transmission gear ratio of the post-shift shift speed. To suppress torque fluctuations of the output member in the torque phase, it is desirable to change the output torque of the rotating electrical machine in accordance with a change in torque ratio. However, an engagement device generally has an error in actual transmission torque with respect to the instruction value of transmission torque (in Patent Literature 1, the instruction value of hydraulic pressure supplied), and due to the error, deviation can also occur in change in output torque of the rotating electrical machine with respect to an actual change in torque ratio in the torque phase.

Hence, it is desired to implement a technique in which in the torque phase, the output torque of the rotating electrical machine is easily changed in accordance with an actual change in torque ratio.

### SOLUTIONS TO PROBLEMS

A control device according to the present disclosure is a control device whose control target is a vehicle drive device including an input member that is drive-coupled to a rotating electrical machine; an output member that is drive-coupled to a wheel; and a transmission including a plurality of engagement devices and disposed in a power transmission path between the input member and the output member, the transmission being configured to be able to form a plurality of shift speeds, and when a shift speed formed by the transmission is allowed to transition from a pre-shift shift speed to a post-shift shift speed by performing engagement of an engagement-side engagement device and disengagement of a disengagement-side engagement device among the plurality of engagement devices, a torque phase in which a torque-sharing ratio between the engagement-side engagement device and the disengagement-side engagement device changes is allowed to proceed by performing engagement control in which transmission torque of the engagement-side engagement device is allowed to gradually increase, and during proceeding of the torque phase, output torque of the rotating electrical machine is controlled such that a rotational speed of the input member approaches a target rotational speed determined based on a pre-shift synchronous rotational speed.

In this configuration, during proceeding of the torque phase, the output torque of the rotating electrical machine is controlled such that the rotational speed of the input member approaches a target rotational speed determined based on a pre-shift synchronous rotational speed. During proceeding of the torque phase, a torque ratio changes from a torque ratio determined based on a transmission gear ratio of the pre-shift shift speed to a torque ratio determined based on a transmission gear ratio of the post-shift shift speed. By controlling the output torque of the rotating electrical machine in the above-described manner, the output torque of the rotating electrical machine can be changed to reach torque determined based on a torque ratio obtained at each point in time. Thus, compared to a case in which the output torque of the rotating electrical machine is changed at a predetermined constant change rate in the torque phase, in the torque phase, the output torque of the rotating electrical machine is easily changed in accordance with an actual change in torque ratio.

Further features and advantages of the control device will become apparent from the following description of an embodiment which will be described with reference to drawings.

### BRIEF DESCRIPTION OF DRAWINGS

FIG. 1 is a schematic diagram showing an example of a vehicle drive device.
FIG. 2 is a schematic diagram showing another example of a vehicle drive device.
FIG. 3 is a flowchart showing an example of a control flow performed by a control device.
FIG. 4 is a flowchart showing another example of a control flow performed by the control device.
FIG. 5 is a time chart showing an example of control behavior exhibited upon upshift.
FIG. 6 is a time chart showing another example of control behavior exhibited upon upshift.
FIG. 7 is a time chart showing an example of control behavior exhibited upon downshift.

### DESCRIPTION OF EMBODIMENTS

An embodiment of a control device will be described with reference to the drawings. In this specification, the term "rotating electrical machine" is used as a concept that includes all of a motor, a generator, and a motor-generator that functions as both a motor and a generator as necessary. In addition, in this specification, the term "drive-coupled" refers to a state in which two rotating elements are coupled together such that drive power (the same meaning as torque) can be transmitted, and includes a state in which the two rotating elements are coupled together such that the two rotating elements rotate together, or a state in which the two rotating elements are coupled together through one or two or more power transmission members such that drive power can be transmitted. Such power transmission members include various types of members (e.g., shafts, gear mechanisms, belts, and chains) that transmit rotation at the same speed or at a changed speed. The power transmission members may include engagement devices (e.g., friction type engagement devices and mesh type engagement devices) that selectively transmit rotation and drive power.

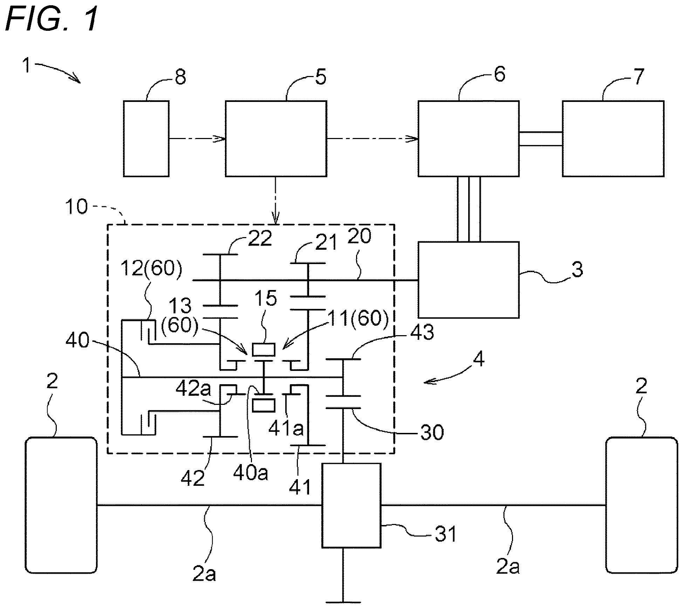

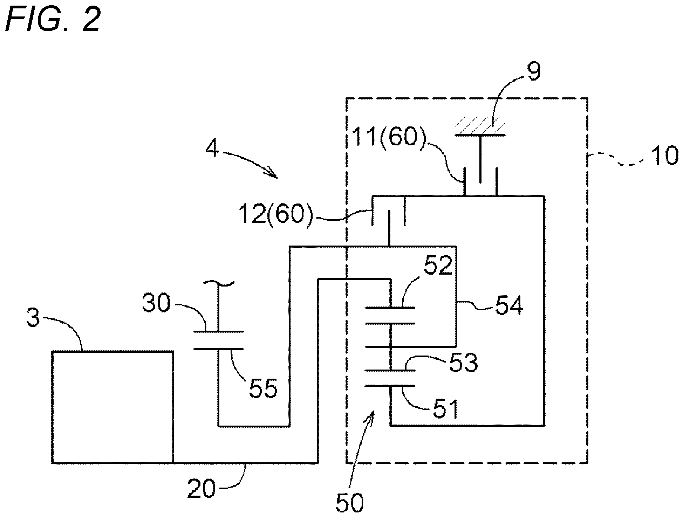

A control device 5 is a control device whose control target is a vehicle drive device 4. An example of the vehicle drive device 4 that can be a control target of the control device 5 is shown in FIG. 1, and another example is shown in FIG. 2. The vehicle drive device 4 that is a control target of the control device 5 is not limited to the vehicle drive devices 4 shown in FIGS. 1 and 2, and may be vehicle drive devices 4 having other configurations.

As shown in FIGS. 1 and 2, the vehicle drive device 4 includes an input member 20 that is drive-coupled to a rotating electrical machine 3; an output member 30 that is drive-coupled to wheels 2; and a transmission 10 disposed in a power transmission path between the input member 20 and the output member 30. Note that in FIGS. 1 and 2, portions having common functions are given the same reference signs, and in FIG. 2, some components in FIG. 1 are omitted. In addition to the rotating electrical machine 3, another drive power source may be drive-coupled to the input member 20. This another drive power source is not limited to a rotating electrical machine and may be drive power sources of other types (e.g., internal combustion engines such as a gasoline engine and a diesel engine).

As shown in FIG. 1, the rotating electrical machine 3 is electrically connected to an electrical storage device 7 such as a battery or a capacitor through an inverter device 6 that performs electric power conversion between direct-current electric power and alternating-current electric power. The rotating electrical machine 3 performs powering by receiving supply of electric power from the electrical storage device 7, or supplies electric power generated by an inertial force of a vehicle 1, etc., to the electrical storage device 7 to store the electric power in the electrical storage device 7. As the rotating electrical machine 3, an alternating-current rotating electrical machine that is driven by three-phase alternating currents (an example of multiphase alternating currents) can be used.

In the two examples shown in FIGS. 1 and 2, the input member 20 is coupled to the rotating electrical machine 3 such that the input member 20 rotates together with the rotating electrical machine 3 (specifically, a rotor shaft of the rotating electrical machine 3). In addition, in these two examples, the output member 30 is drive-coupled to the two wheels 2. Specifically, the output member 30 is coupled to the two wheels 2 (e.g., two front wheels or two rear wheels) through an output differential gear device 31. The output differential gear device 31 includes, for example, a differential gear mechanism of a bevel gear type, a planetary gear type, or the like, and distributes rotation of the output member 30 that functions as a differential input gear to the two wheels 2. As shown in FIG. 1, the vehicle 1 is provided with axles 2a that are coupled to the wheels 2. The axles 2a are shaft members (drive shafts) that rotate together with the wheels 2. In the example shown in FIG. 1, the axles 2a couple together the output differential gear device 31 and the wheels 2, and the output differential gear device 31 distributes rotation of the output member 30 to the two axles 2a, thereby distributing the rotation of the output member 30 to the two wheels 2. The output member 30 can also be configured to be drive-coupled to one wheel 2 instead of the two wheels 2 (i.e., one axle 2a instead of the two axles 2a).

The transmission 10 changes the speed of rotation of the input member 20 and transmits the rotation to the output member 30. The transmission 10 is configured to be able to change a transmission gear ratio which is a ratio of the rotational speed of the input member 20 to the rotational speed of the output member 30. The transmission 10 is a stepped automatic transmission that can form a plurality of shift speeds with different transmission gear ratios, and in the present embodiment, the transmission 10 is configured to be able to form a first shift speed and a second shift speed having a smaller transmission gear ratio than the first shift speed. As such, the transmission 10 is configured to be able to form a plurality of shift speeds (in the present embodiment, a plurality of shift speeds including the first shift speed and the second shift speed). The transmission 10 includes a plurality of engagement devices 60. In the examples shown in FIGS. 1 and 2, the transmission 10 includes a first engagement device 11 which is an engagement device 60; and a second engagement device 12 which is a different engagement device 60 than the first engagement device 11. The transmission 10 is configured to form the first shift speed in a state in which the first engagement device 11 is engaged and the second engagement device 12 is disengaged, and form the second shift speed in a state in which the first engagement device 11 is disengaged and the second engagement device 12 is engaged.

In the example shown in FIG. 1, the first engagement device 11 is a mesh type engagement device (dog clutch). The state of engagement of the mesh type engagement device is switched between an engaged state and a disengaged state. The state of engagement of the mesh type engagement device is switched by an actuator such as a motor-driven actuator, a hydraulic actuator, or an electromagnetic actuator. Specifically, in the example shown in FIG. 1, the first engagement device 11 includes a sleeve member 15 that is driven in an axial direction by the actuator, and the state of engagement of the first engagement device 11 is switched based on the location in the axial direction of the sleeve member 15. Here, the axial direction is a direction going along an axis on which the first engagement device 11 is disposed (in the example shown in FIG. 1, an axis on which an intermediate member 40 is disposed).

In the example shown in FIG. 2, the first engagement device 11 is a friction type engagement device. In addition, in the examples shown in FIGS. 1 and 2, the second engagement device 12 is a friction type engagement device. As the friction type engagement device, for example, a multiplate wet clutch can be used. The state of engagement of the friction type engagement device is switched between a direct-coupling engaged state, a slip-engaged state, and a disengaged state. The state of engagement of the friction type engagement device is switched by an actuator such as a motor-driven actuator, a hydraulic actuator (a hydraulic servomechanism, etc.), or an electromagnetic actuator. In the direct-coupling engaged state, torque is transmitted between engagement members of the friction type engagement device by static friction, with no rotational speed difference (slippage) between the engagement members. In the slip-engaged state, torque is transmitted between engagement members of the friction type engagement device by dynamic friction, with a rotational speed difference between the engagement members. In the friction type engagement device, even when an instruction to generate transmission torque capacity is not issued by the control device 5, transmission torque capacity may be generated by dragging between the engagement members. In this specification, such drag torque is not taken into account upon classification of the states of engagement, and a state in which transmission torque capacity is generated by dragging between the engagement members when an instruction to generate transmission torque capacity is not issued (i.e., a state in which drag torque is generated) is considered a "disengaged state".

In the example shown in FIG. 1, the transmission 10 is a parallel-shaft gear type transmission having a configuration in which a plurality of gears disposed on a plurality of parallel shafts mesh with each other. The transmission 10 shown in FIG. 1 includes a first input gear 21 and a second input gear 22, each of which is disposed on the same shaft as the input member 20; and a first intermediate gear 41 and a second intermediate gear 42, each of which is disposed on the same shaft as the intermediate member 40. The intermediate member 40 is disposed on a different shaft than the input member 20 (a shaft parallel to a shaft on which the input member 20 is disposed), and includes a third intermediate gear 43 that meshes with a gear included in the output member 30. The first intermediate gear 41 meshes with the first input gear 21, and the second intermediate gear 42 meshes with the second input gear 22. A gear ratio between the first input gear 21 and the first intermediate gear 41 and a gear ratio between the second input gear 22 and the second intermediate gear 42 are set such that a ratio of the rotational speed of the first input gear 21 to the rotational speed of the first intermediate gear 41 is larger than a ratio of the rotational speed of the second input gear 22 to the rotational speed of the second intermediate gear 42.

In a state in which the first shift speed is formed by engaging the first engagement device 11 and disengaging the second engagement device 12, the input member 20 and the intermediate member 40 are coupled together through a gear pair including the first input gear 21 and the first intermediate gear 41, and the speed of rotation of the input member 20 is changed based on a gear ratio of the gear pair, and the rotation is transmitted to the intermediate member 40. In addition, in a state in which the second shift speed is formed by disengaging the first engagement device 11 and engaging the second engagement device 12, the input member 20 and the intermediate member 40 are coupled together through a gear pair including the second input gear 22 and the second intermediate gear 42, and the speed of rotation of the input member 20 is changed based on a gear ratio of the gear pair, and the rotation is transmitted to the intermediate member 40.

In the example shown in FIG. 1, the first input gear 21 and the second input gear 22 are coupled to the input member 20 such that the first input gear 21 and the second input gear 22 rotate together with the input member 20. The first engagement device 11 selectively couples together the first intermediate gear 41 and the intermediate member 40, and the second engagement device 12 selectively couples together the second intermediate gear 42 and the intermediate member 40. The first shift speed is formed in a state in which the first intermediate gear 41 and the intermediate member 40 are coupled together by engaging the first engagement device 11, and coupling of the second intermediate gear 42 to the intermediate member 40 is released by disengaging the second engagement device 12. In addition, the second shift speed is formed in a state in which coupling of the first intermediate gear 41 to the intermediate member 40 is released by disengaging the first engagement device 11, and the second intermediate gear 42 and the intermediate member 40 are coupled together by engaging the second engagement device 12.

In the example shown in FIG. 1, the sleeve member 15 is disposed so as to fit around a third engagement part 40a that rotates together with the intermediate member 40. Specifically, internal teeth formed on an inner circumferential portion of the sleeve member 15 are engaged with external teeth formed on an outer circumferential portion of the third engagement part 40a in such a manner that relative rotation is restricted and relative movement in the axial direction is allowed (specifically, the internal teeth and the external teeth are spline-engaged). In a state in which the sleeve member 15 has moved to a location in the axial direction at which the sleeve member 15 is engaged with both of the third engagement part 40a and a first engagement part 41a that rotates together with the first intermediate gear 41 (a location more to the right in the drawing than the location of the sleeve member 15 shown in FIG. 1), the first engagement device 11 is engaged, coupling together the first intermediate gear 41 and the intermediate member 40. In this state, the internal teeth formed on the inner circumferential portion of the sleeve member 15 are engaged with both of the external teeth formed on the outer circumferential portion of the third engagement part 40a and external teeth formed on an outer circumferential portion of the first engagement part 41a. In addition, in a state in which the sleeve member 15 has moved to a location in the axial direction at which the sleeve member 15 is not engaged with the first engagement part 41a (e.g., the location of the sleeve member 15 shown in FIG. 1), the first engagement device 11 is disengaged, releasing coupling of the first intermediate gear 41 to the intermediate member 40.

In the example shown in FIG. 1, the transmission 10 further includes a third engagement device 13 which is a different engagement device 60 than the first engagement device 11 and the second engagement device 12. The third engagement device 13 is provided in parallel to the second engagement device 12, and selectively couples together the second intermediate gear 42 and the intermediate member 40. Thus, the second shift speed is also formed by engaging the third engagement device 13 instead of the second engagement device 12. The third engagement device 13 is a mesh type engagement device. In the example shown in FIG. 1, the first engagement device 11 and the third engagement device 13 are formed using the sleeve member 15 shared thereby, and the state of engagement of the third engagement device 13 is switched based on the location in the axial direction of the sleeve member 15. Specifically, in a state in which the sleeve member 15 has moved to a location in the axial direction at which the sleeve member 15 is engaged with both of the third engagement part 40a and a second engagement part 42a that rotates together with the second intermediate gear 42 (a location more to the left in the drawing than the location of the sleeve member 15 shown in FIG. 1), the third engagement device 13 is engaged, coupling together the second intermediate gear 42 and the intermediate member 40. In this state, the internal teeth formed on the inner circumferential portion of the sleeve member 15 are engaged with both of the external teeth formed on the outer circumferential portion of the third engagement part 40a and external teeth formed on an outer circumferential portion of the second engagement part 42a. In addition, in a state in which the sleeve member 15 has moved to a location in the axial direction at which the sleeve member 15 is not engaged with the second engagement part 42a (e.g., the location of the sleeve member 15 shown in FIG. 1), the third engagement device 13 is disengaged, releasing coupling of the second intermediate gear 42 to the intermediate member 40.

In the example shown in FIG. 2, the transmission 10 is a planetary gear type transmission that is formed using one or more planetary gear mechanisms (here, one planetary gear mechanism 50). The planetary gear mechanism 50 is a single-pinion type planetary gear mechanism, and includes a sun gear 51, a ring gear 52, and a carrier 54 that rotatably supports a pinion gear 53 that meshes with both of the sun gear 51 and the ring gear 52. The ring gear 52 is coupled to the input member 20 so as to rotate together with the input member 20, and the carrier 54 is coupled to an output gear 55 that meshes with a gear included in the output member 30, so as to rotate together with the output gear 55.

In the example shown in FIG. 2, the first engagement device 11 selectively fixes the sun gear 51 to a case 9 (an example of a fixing member) of the vehicle drive device 4, and the second engagement device 12 selectively couples together the sun gear 51 and the carrier 54. The first shift speed is formed in a state in which the sun gear 51 is fixed to the case 9 by engaging the first engagement device 11, and coupling of the sun gear 51 to the carrier 54 is released by disengaging the second engagement device 12. In this state, rotation of the input member 20 decelerates based on a gear ratio of the planetary gear mechanism 50, and is transmitted to the output gear 55. In addition, the second shift speed is formed in a state in which the sun gear 51 is detached from the case 9 by disengaging the first engagement device 11, and the sun gear 51 and the carrier 54 are coupled together by engaging the second engagement device 12. In this state, rotation of the input member 20 is transmitted to the output gear 55 at its original rotational speed.

Next, a configuration of the control device 5 will be described. The control device 5 includes, as a core member, an arithmetic processing device such as a central processing unit (CPU) and includes storage devices that can be referred to by the arithmetic processing device, such as a random access memory (RAM) and a read only memory (ROM). Each function of the control device 5 is implemented by software (program) stored in a storage device such as the ROM or by hardware provided separately such as an arithmetic circuit or by both the software and hardware. The arithmetic processing device included in the control device 5 operates as a computer that executes each program.

As shown in a simplified manner in FIG. 1, the vehicle 1 is provided with a sensor group 8, and the control device 5 is configured to be able to obtain detection information of various types of sensors (sensor detection information) included in the sensor group 8. The sensor detection information includes, for example, information on an accelerator pedal position, information on the amount of brake operation, information on vehicle speed, information on the rotational speed of the input member 20, information on the rotational speed of the output member 30, information on an operation of selecting a range (a travel range, a neutral range, a parking range, etc.) by a driver of the vehicle 1, information on an operation of changing the shift speed (shift operation) by the driver of the vehicle 1, and information on the location or amount of movement in the axial direction of the sleeve member 15.

When the control device 5 allows a shift speed formed by the transmission 10 to transition from a pre-shift shift speed to a post-shift shift speed by performing engagement of an engagement-side engagement device and disengagement of a disengagement-side engagement device among the plurality of engagement devices 60, the control device 5 allows a torque phase in which a torque-sharing ratio between the engagement-side engagement device and the disengagement-side engagement device changes to proceed by performing engagement control in which the transmission torque of the engagement-side engagement device is allowed to gradually increase (specifically, the absolute value of the transmission torque is allowed to gradually increase). The control device 5 allows the transmission torque of the engagement-side engagement device to gradually increase by controlling the operation of an actuator of the engagement-side engagement device to gradually increase the engagement pressure of the engagement-side engagement device.

When the engagement-side engagement device is a friction type engagement device, the control device 5 allows the torque phase to proceed by performing engagement control. In the example shown in FIG. 1, in a case in which the pre-shift shift speed is the first shift speed and the post-shift shift speed is the second shift speed, the engagement-side engagement device is a friction type engagement device (specifically, the second engagement device 12). In the example shown in FIG. 2, in both of a case in which the pre-shift shift speed is the first shift speed and the post-shift shift speed is the second shift speed and a case in which the pre-shift shift speed is the second shift speed and the post-shift shift speed is the first shift speed, the engagement-side engagement device is a friction type engagement device (specifically, the second engagement device 12 in the former case, and the first engagement device 11 in the latter case).

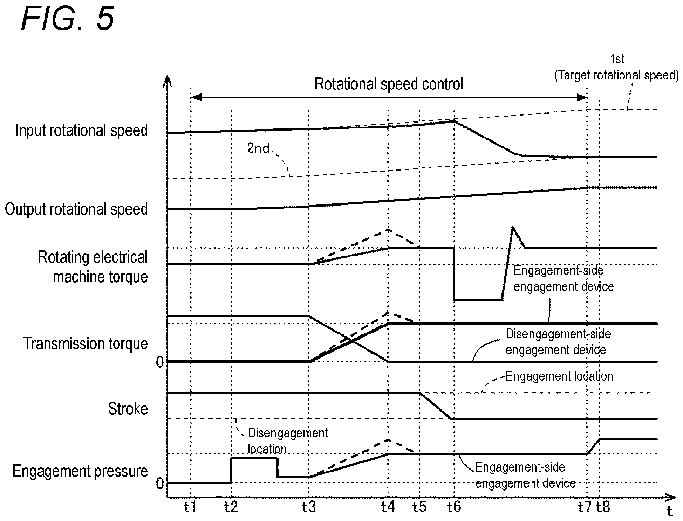

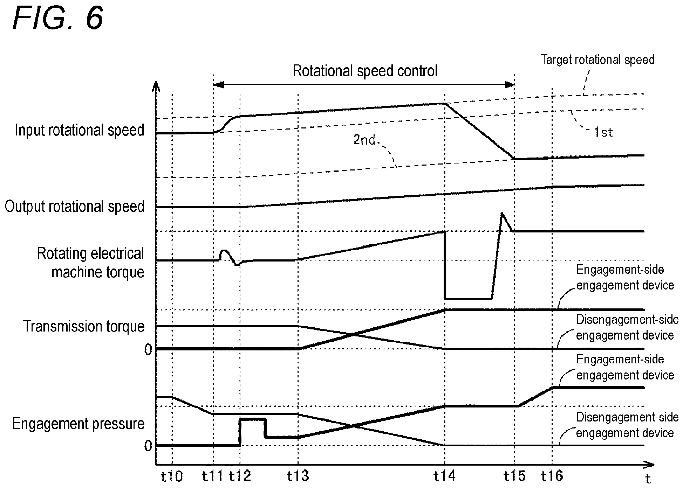

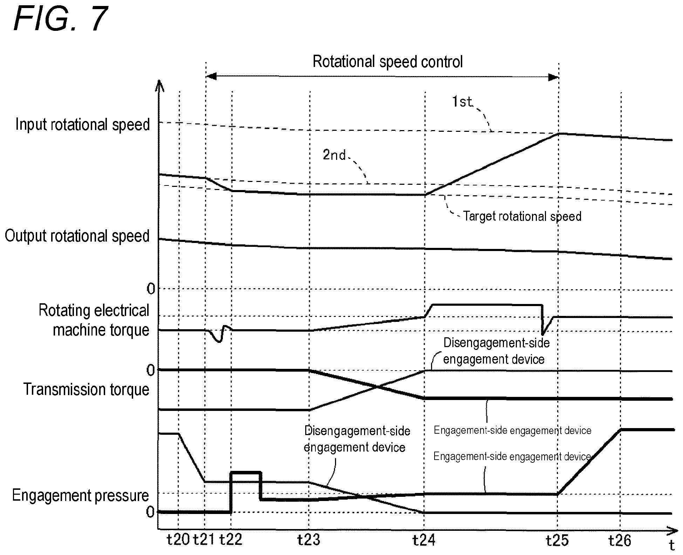

During performance of the engagement control (in other words, during proceeding of the torque phase), the control device 5 controls the output torque of the rotating electrical machine 3 such that the rotational speed of the input member 20 approaches a target rotational speed determined based on a pre-shift synchronous rotational speed. Here, the pre-shift synchronous rotational speed is the rotational speed of the input member 20 that is determined based on the rotational speed of the output member 30 and the transmission gear ratio of the pre-shift shift speed. Specifically, the pre-shift synchronous rotational speed is a rotational speed obtained by multiplying the rotational speed of the output member 30 by the transmission gear ratio of the pre-shift shift speed. In addition, the term "target rotational speed determined based on a pre-shift synchronous rotational speed" is a concept including both of a case in which as in an example shown in FIG. 5 which will be referred to later, the target rotational speed is equal to the pre-shift synchronous rotational speed, and a case in which as in examples shown in FIGS. 6 and 7 which will be referred to later, the target rotational speed differs from the pre-shift synchronous rotational speed by a specified value.

When a shift speed transition is a power-on upshift or a power-off downshift, during performance of the engagement control (in other words, during proceeding of the torque phase), the control device 5 controls the output torque of the rotating electrical machine 3 such that the rotational speed of the input member 20 approaches a target rotational speed determined based on a pre-shift synchronous rotational speed. The power-on upshift is an upshift (a shift speed transition toward a relatively small transmission gear ratio) in a state in which positive torque which is torque in a forward acceleration direction is transmitted to the wheels 2 (e.g., an accelerator-on state), and the power-off downshift is a downshift (a shift speed transition toward a relatively large transmission gear ratio) in a state in which negative torque in an opposite direction to the positive torque is transmitted to the wheels 2 (e.g., an accelerator-off state).

By the control device 5 performing rotational speed control on the rotating electrical machine 3 during performance of the engagement control (in other words, during proceeding of the torque phase), the control device 5 controls the output torque of the rotating electrical machine 3 such that the rotational speed of the input member 20 approaches a target rotational speed. The rotational speed control on the rotating electrical machine 3 is control in which an instruction of a target rotational speed is provided to the rotating electrical machine 3, and the output torque of the rotating electrical machine 3 is determined such that the rotational speed of the rotating electrical machine 3 follows the target rotational speed. There is also a case in which the control device 5 performs torque control on the rotating electrical machine 3. The torque control on the rotating electrical machine 3 is control in which an instruction of target torque is provided to the rotating electrical machine 3, and the output torque of the rotating electrical machine 3 is allowed to follow the target torque. The control device 5 determines the target torque of the rotating electrical machine 3 based on, for example, sensor detection information (e.g., information on an accelerator pedal position and vehicle speed). With torque required to be transmitted to the wheels 2 being wheels' required torque, the target torque of the rotating electrical machine 3 is basically set to torque obtained by converting the wheels' required torque to torque in the rotating electrical machine 3 (specifically, torque obtained by dividing the wheels' required torque by a total transmission gear ratio in a power transmission path from the rotating electrical machine 3 to the wheels 2).

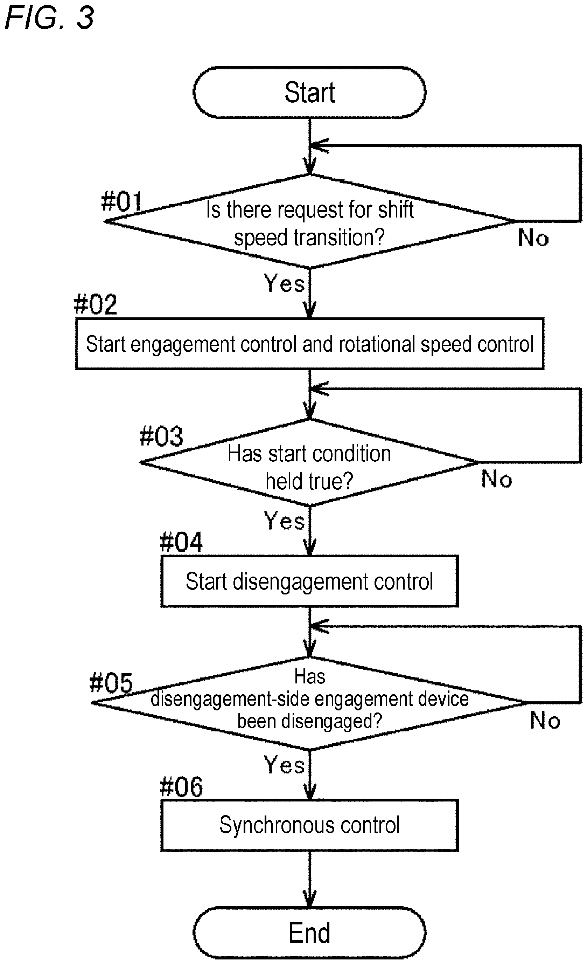

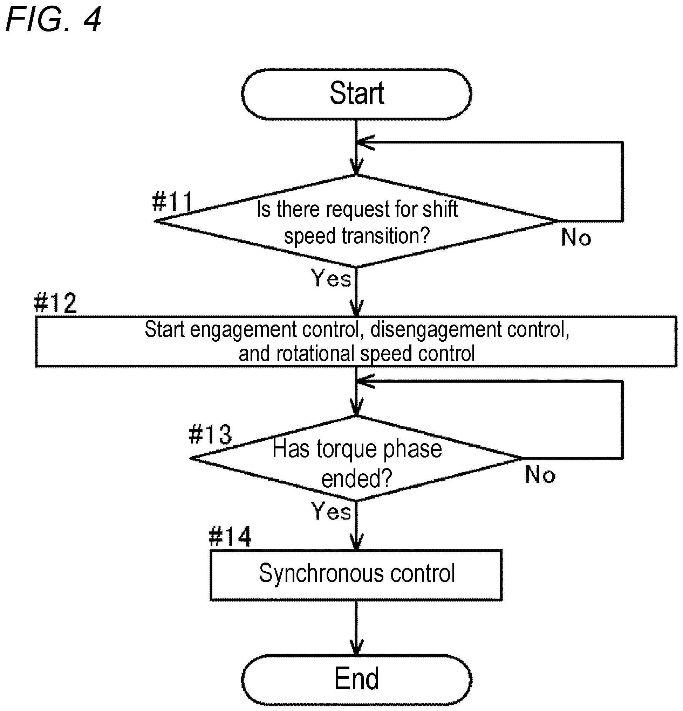

When there is a request for a shift speed transition (specifically, a request for a power-on upshift or a power-off downshift), the control device 5 allows a shift speed formed by the transmission 10 to transition from a pre-shift shift speed to a post-shift shift speed by performing engagement of the engagement-side engagement device and disengagement of the disengagement-side engagement device in accordance with, for example, a processing procedure of FIG. 3 or 4. The control device 5 determines that there is a request for a shift speed transition, for example, when a target shift speed that is determined based on sensor detection information (e.g., information on an accelerator pedal position and vehicle speed) has been changed or when a shift operation by the driver of the vehicle 1 has been detected. FIG. 3 shows an example of a control flow for a case in which the disengagement-side engagement device is a mesh type engagement device as in a case in which the transmission 10 shown in FIG. 1 performs transition operation from the first shift speed to the second shift speed. FIG. 4 shows an example of a control flow for a case in which the disengagement-side engagement device is a friction type engagement device as in a case in which the transmission 10 shown in FIG. 2 performs transition operation from the first shift speed to the second shift speed or transition operation from the second shift speed to the first shift speed.

When the control device 5 controls shift operation of the transmission 10 in accordance with a processing procedure shown in FIG. 3, if there is a request for a shift speed transition (step #01: Yes), then the control device 5 starts engagement control and rotational speed control (step #02). The rotational speed control at step #02 and at step #12 which will be described later (see FIG. 4) is control in which the output torque of the rotating electrical machine 3 is controlled such that the rotational speed of the input member 20 approaches a target rotational speed determined based on a pre-shift synchronous rotational speed. Start timing of the engagement control and start timing of the rotational speed control may be the same or may be different from each other.

After the control device 5 starts the engagement control and the rotational speed control, the control device 5 determines whether a start condition for disengagement control in which the disengagement-side engagement device is disengaged has held true (step #03), and if the control device 5 determines that the start condition has held true (step #03: Yes), then the control device 5 starts disengagement control (step #04). After the control device 5 starts the disengagement control, the control device 5 determines whether the disengagement-side engagement device has been disengaged (step #05), and if the control device 5 determines that the disengagement-side engagement device has been disengaged (step #05: Yes), then the control device 5 performs synchronous control (step #06) and completes the shift speed transition. The synchronous control at step #06 and at step #14 which will be described later (see FIG. 4) is control in which the output torque of the rotating electrical machine 3 is controlled such that the rotational speed of the input member 20 approaches a post-shift synchronous rotational speed. The post-shift synchronous rotational speed is the rotational speed of the input member 20 that is determined based on the rotational speed of the output member 30 and the transmission gear ratio of the post-shift shift speed. Specifically, the post-shift synchronous rotational speed is a rotational speed obtained by multiplying the rotational speed of the output member 30 by the transmission gear ratio of the post-shift shift speed. A detail of each process shown in FIG. 3 will be described later with reference to FIG. 5.

When the control device 5 controls shift operation of the transmission 10 in accordance with a processing procedure shown in FIG. 4, if there is a request for a shift speed transition (step #11: Yes), then the control device 5 starts engagement control, disengagement control in which the disengagement-side engagement device is disengaged, and rotational speed control (step #12). Start timing of the engagement control, start timing of the disengagement control, and start timing of the rotational speed control may be the same or may be different from each other. After the control device 5 starts the engagement control, the disengagement control, and the rotational speed control, the control device 5 determines whether a torque phase has ended (step #13), and if the control device 5 determines that a torque phase has ended (step #13: Yes), then the control device 5 performs synchronous control (step #14) and completes the shift speed transition. A detail of each process shown in FIG. 4 will be described later with reference to FIGS. 6 and 7.

FIG. 5 shows an example of control behavior exhibited when the control device 5 performs a shift speed transition from the first shift speed to the second shift speed in the transmission 10 shown in FIG. 1, in accordance with the processing procedure shown in FIG. 3. FIG. 5 shows, from top to bottom, a graph of input rotational speed which is the rotational speed of the input member 20, a graph of output rotational speed which is the rotational speed of the output member 30, a graph of rotating electrical machine torque which is the output torque of the rotating electrical machine 3, a graph of transmission torque of each of the engagement-side engagement device (second engagement device 12) and the disengagement-side engagement device (first engagement device 11), a graph of a stroke (a location in the axial direction) of the sleeve member 15 included in the disengagement-side engagement device (first engagement device 11), and a graph of engagement pressure (specifically, the instruction value of engagement pressure) of the engagement-side engagement device (second engagement device 12). In examples shown in FIG. 5 and FIGS. 6 and 7 which will be referred to later, a rotational speed represented by "1st" in the graph of input rotational speed is a rotational speed obtained by multiplying the rotational speed of the output member 30 by the transmission gear ratio of the first shift speed, and a rotational speed represented by "2nd" in the graph of input rotational speed is a rotational speed obtained by multiplying the rotational speed of the output member 30 by the transmission gear ratio of the second shift speed. In FIG. 5, the rotational speed represented by "1st" corresponds to a "pre-shift synchronous rotational speed" and the rotational speed represented by "2nd" corresponds to a "post-shift synchronous rotational speed".

In FIG. 5, a situation is assumed in which at a point in time earlier than time t1, the vehicle 1 is traveling, with the transmission 10 forming the first shift speed. At the point in time earlier than time t1, the control device 5 performs torque control on the rotating electrical machine 3, and the rotating electrical machine 3 is controlled to output torque (positive torque in a direction in which the vehicle 1 travels forward) obtained by converting wheels' required torque to torque in the rotating electrical machine 3. When there is a request for a shift speed transition (specifically, a request for a power-on upshift) at time t1, the control device 5 starts engagement control and rotational speed control (rotational speed control on the rotating electrical machine 3) at time t1 or at a later point in time than time 11.

In FIG. 5, a case is assumed in which the actuator of the engagement-side engagement device is a hydraulic actuator (specifically, a hydraulic servomechanism), and at time t2 later than time t1, the control device 5 starts preparation control for increasing the engagement pressure of the engagement-side engagement device (specifically, control to pre-fill hydraulic oil). Thereafter, at time t3 later than time t2, the control device 5 starts engagement control, in other words, control to gradually increase the engagement pressure of the engagement-side engagement device (specifically, control to gradually increase from a value obtained after the pre-filling of hydraulic oil). In the examples shown in FIG. 5 and FIGS. 6 and 7 which will be referred to later, the transmission torque of the engagement-side engagement device is allowed to gradually increase at a certain change rate by gradually increasing the engagement pressure of the engagement-side engagement device at a certain change rate. At or after time t3, a torque phase in which a torque-sharing ratio between the engagement-side engagement device and the disengagement-side engagement device changes proceeds. Specifically, at or after time t3, with the gradual increase in the engagement pressure of the engagement-side engagement device, the transmission torque of the engagement-side engagement device gradually increases, and the proportion of torque transmitted by the transmission 10 and shared by the engagement-side engagement device increases, and accordingly, the transmission torque of the disengagement-side engagement device gradually decreases toward zero.

In FIG. 5, the control device 5 starts rotational speed control on the rotating electrical machine 3 at time t1, and at or after time t1, the control device 5 controls the output torque of the rotating electrical machine 3 such that the rotational speed of the input member 20 approaches a target rotational speed determined based on the pre-shift synchronous rotational speed. This control is performed even at or after time t3 at which the engagement control starts, and thus, at or after time t3, the output torque of the rotating electrical machine 3 changes to reach torque determined based on a torque ratio (a ratio of the torque of the input member 20 to the torque of the output member 30) obtained at each point in time. In the examples shown in FIG. 5 and FIGS. 6 and 7 which will be referred to later, a case is assumed in which a pre-shift synchronous rotational speed and a target rotational speed based on the pre-shift synchronous rotational speed are set so as to obtain constant torque of the output member 30, and the output torque of the rotating electrical machine 3 changes in accordance with a change in torque ratio so as to maintain the torque of the output member 30.

In the example shown in FIG. 5, the disengagement-side engagement device (first engagement device 11) is a mesh type engagement device, and the control device 5 allows the above-described target rotational speed based on the pre-shift synchronous rotational speed to match the pre-shift synchronous rotational speed. When the disengagement-side engagement device is a mesh type engagement device, the disengagement-side engagement device remains in an engaged state during a period before the disengagement-side engagement device is disengaged at the end of the torque phase. By thus allowing the target rotational speed to match the pre-shift synchronous rotational speed when the disengagement-side engagement device is a mesh type engagement device, the target rotational speed is appropriately set, and in the torque phase, the output torque of the rotating electrical machine 3 can be changed in accordance with an actual change in torque ratio.

In the examples shown in FIG. 5 and FIGS. 6 and 7 which will be referred to later, in the engagement control, the control device 5 allows the transmission torque of the engagement-side engagement device to gradually increase toward target transmission torque for allowing torques transmitted from the rotating electrical machine 3 to the wheels 2 before and after a transition from the pre-shift shift speed to the post-shift shift speed to be equal to each other. Here, torque obtained by converting the target transmission torque to torque in the rotating electrical machine 3 is referred to as target output torque. Namely, the target output torque is torque obtained by dividing the target transmission torque by a total transmission gear ratio in a power transmission path from the rotating electrical machine 3 to the engagement-side engagement device. When the output torque of the rotating electrical machine 3 before the shift speed transition is "T", the transmission gear ratio of the pre-shift shift speed is "G1", and the transmission gear ratio of the post-shift shift speed is "G2", the target output torque is represented by T x G1/G2. In the present embodiment, in the engagement control, the control device 5 adjusts the instruction value of transmission torque (here, the instruction value of engagement pressure) of the engagement-side engagement device such that the output torque of the rotating electrical machine 3 approaches the target output torque, based on a torque difference between the output torque of the rotating electrical machine 3 obtained at a point in time at which the instruction value of transmission torque of the engagement-side engagement device reaches a target instruction value determined based on the target transmission torque, and the target output torque. For example, the control device 5 can be configured to make such an adjustment when the above-described torque difference is greater than or equal to a specified value. Note that the magnitude of output torque of the rotating electrical machine 3 can be obtained based on, for example, the value of current flowing through the rotating electrical machine 3.

During performance of the engagement control (in other words, during proceeding of the torque phase), the output torque of the rotating electrical machine 3 is controlled such that the rotational speed of the input member 20 approaches the target rotational speed determined based on the pre-shift synchronous rotational speed. Hence, the output torque of the rotating electrical machine 3 at a point in time at which the instruction value of transmission torque of the engagement-side engagement device reaches the target instruction value is torque based on actual transmission torque of the engagement-side engagement device obtained at the point in time, and when the actual transmission torque of the engagement-side engagement device at this point in time differs from the target transmission torque, a torque difference based on a difference between these two transmission torques occurs between the output torque of the rotating electrical machine 3 and the target output torque. By adjusting, as described above, the instruction value of transmission torque of the engagement-side engagement device such that the output torque of the rotating electrical machine 3 approaches the target output torque, based on a torque difference between the output torque of the rotating electrical machine 3 obtained at a point in time at which the instruction value of transmission torque of the engagement-side engagement device reaches a target instruction value determined based on the target transmission torque, and the target output torque, deviation between the actual transmission torque of the engagement-side engagement device and the target transmission torque is grasped based on the torque difference, and the instruction value of transmission torque of the engagement-side engagement device can be adjusted such that the actual transmission torque of the engagement-side engagement device approaches the target transmission torque.

Particularly, when the disengagement-side engagement device is a mesh type engagement device as in the situation assumed in FIG. 5, in order to suppress acceleration fluctuations of the vehicle 1 associated with disengagement of the disengagement-side engagement device to a small level, it is desirable that the disengagement-side engagement device be able to be disengaged in a state in which the transmission torque of the disengagement-side engagement device is close to zero. In this regard, as described above, by grasping deviation between the actual transmission torque of the engagement-side engagement device and the target transmission torque and adjusting the instruction value of transmission torque of the engagement-side engagement device such that the actual transmission torque of the engagement-side engagement device approaches the target transmission torque, the actual transmission torque of the engagement-side engagement device approaches the target transmission torque, by which the transmission torque of the disengagement-side engagement device can approach zero. Thus, even when the actual transmission torque of the engagement-side engagement device at a point in time at which the instruction value of transmission torque of the engagement-side engagement device reaches the target instruction value differs from the target transmission torque, the disengagement-side engagement device can be disengaged in a state in which the transmission torque of the disengagement-side engagement device is close to zero.

It is preferred that the control device 5 be configured to adjust, in the engagement control, the target instruction value based on a torque difference (a torque difference between the output torque of the rotating electrical machine 3 obtained at a point in time at which the instruction value of transmission torque of the engagement-side engagement device reaches a target instruction value determined based on the target transmission torque, and the target output torque) obtained in past engagement control (e.g., the last engagement control). In this case, by learning past shift behavior, the target instruction value can be adjusted such that the actual transmission torque of the engagement-side engagement device obtained at a point in time at which the instruction value of transmission torque of the engagement-side engagement device reaches the target instruction value approaches the target transmission torque. For example, a configuration can be adopted in which the instruction value of transmission torque of the engagement-side engagement device that is obtained after making an adjustment to allow the output torque of the rotating electrical machine 3 to approach the target output torque and that is used in past engagement control is used as a new target instruction value based on the target transmission torque.

In FIG. 5, at time t4, the instruction value of transmission torque (here, the instruction value of engagement pressure) of the engagement-side engagement device reaches the target instruction value determined based on the target transmission torque. In FIG. 5, a case in which there is no torque difference between the output torque of the rotating electrical machine 3 and the target output torque at a point in time at which the instruction value of transmission torque of the engagement-side engagement device reaches the target instruction value is represented by solid lines. In this case, at the point in time at which the instruction value of transmission torque of the engagement-side engagement device reaches the target instruction value, the engagement control is terminated, and the transmission torque of the engagement-side engagement device is maintained thereafter. In addition, in FIG. 5, a case in which there is a torque difference between the output torque of the rotating electrical machine 3 and the target output torque at a point in time at which the instruction value of transmission torque of the engagement-side engagement device reaches the target instruction value, due to an error in actual transmission torque with respect to the instruction value of transmission torque of the engagement-side engagement device is represented by broken lines. Specifically, a case in which the output torque of the rotating electrical machine 3 is greater than the target output torque because the transmission torque of the engagement-side engagement device obtained at a point in time at which the instruction value of transmission torque of the engagement-side engagement device reaches the target instruction value is greater than the target transmission torque is represented by broken lines. In an example represented by the broken lines in FIG. 5, by adjusting the instruction value of transmission torque of the engagement-side engagement device (here, by adjusting the transmission torque toward a smaller value) such that the output torque of the rotating electrical machine 3 approaches the target output torque, based on a torque difference between the output torque of the rotating electrical machine 3 and the target output torque, at time t5, the output torque of the rotating electrical machine 3 becomes equal to the target torque and the transmission torque of the engagement-side engagement device becomes equal to the target transmission torque. In a case of making an adjustment of the instruction value of transmission torque of the engagement-side engagement device, the engagement control is terminated at a point in time at which the adjustment is completed, and the transmission torque of the engagement-side engagement device is maintained thereafter.

In the example shown in FIG. 5, at time t5 after the torque difference between the output torque of the rotating electrical machine 3 and the target output torque becomes less than or equal to the specified value, the control device 5 starts disengagement control in which the disengagement-side engagement device is disengaged. In this case, the start condition at step #03 of FIG. 3 holds true at or after a point in time at which the instruction value of transmission torque of the engagement-side engagement device reaches the target instruction value and when the torque difference between the output torque of the rotating electrical machine 3 and the target output torque is less than or equal to the specified value. In the disengagement control, the control device 5 controls the operation of the actuator of the disengagement-side engagement device (first engagement device 11) to provide thrust in the axial direction to the sleeve member 15, by which the sleeve member 15 moves from a location (engagement location) at which the first engagement device 11 is engaged to a location (disengagement location) at which the first engagement device 11 is disengaged.

In the example shown in FIG. 5, at time t6, the sleeve member 15 reaches the disengagement location, by which the disengagement-side engagement device is disengaged. When the disengagement-side engagement device is disengaged at time t6, the control device 5 terminates the control in which the output torque of the rotating electrical machine 3 is controlled such that the rotational speed of the input member 20 approaches the target rotational speed determined based on the pre-shift synchronous rotational speed, and starts synchronous control. The synchronous control is control in which the output torque of the rotating electrical machine 3 is controlled such that the rotational speed of the input member 20 approaches the post-shift synchronous rotational speed. When the rotational speed of the input member 20 reaches the post-shift synchronous rotational speed (in other words, when a rotational speed difference between the rotational speed of the input member 20 and the post-shift synchronous rotational speed becomes less than or equal to a specified value) at time t7, the control device 5 terminates the rotational speed control on the rotating electrical machine 3 and starts torque control on the rotating electrical machine 3, and performs control to increase the engagement pressure of the engagement-side engagement device (e.g., to increase the engagement pressure to line pressure), and completes the shift speed transition at time t8.

FIG. 6 shows an example of control behavior exhibited when the control device 5 performs a shift speed transition from the first shift speed to the second shift speed in the transmission 10 shown in FIG. 2, in accordance with the processing procedure shown in FIG. 4. FIG. 6 shows, from top to bottom, a graph of input rotational speed which is the rotational speed of the input member 20, a graph of output rotational speed which is the rotational speed of the output member 30, a graph of rotating electrical machine torque which is the output torque of the rotating electrical machine 3, a graph of transmission torque of each of the engagement-side engagement device (second engagement device 12) and the disengagement-side engagement device (first engagement device 11), and a graph of engagement pressure (specifically, the instruction value of engagement pressure) of each of the engagement-side engagement device (second engagement device 12) and the disengagement-side engagement device (first engagement device 11). Here, the rotational speed represented by "1st" corresponds to a "pre-shift synchronous rotational speed" and the rotational speed represented by "2nd" corresponds to a "post-shift synchronous rotational speed".

In FIG. 6, a situation is assumed in which at a point in time earlier than time t10, the vehicle 1 is traveling, with the transmission 10 forming the first shift speed. At the point in time earlier than time t10, the control device 5 performs torque control on the rotating electrical machine 3, and the rotating electrical machine 3 is controlled to output torque (positive torque in a direction in which the vehicle 1 travels forward) obtained by converting wheels' required torque to torque in the rotating electrical machine 3. When there is a request for a shift speed transition (specifically, a request for a power-on upshift) at time t10, the control device 5 starts engagement control and rotational speed control (rotational speed control on the rotating electrical machine 3) at time t10 or at a later point in time than time t10.

In the example shown in FIG. 6, the engagement pressure of the disengagement-side engagement device decreases at time t10, and the disengagement-side engagement device transitions from a direct-coupling engaged state to a slip-engaged state at time 111. The control device 5 starts rotational speed control on the rotating electrical machine 3 at time 111, and at or after time 111, the control device 5 controls the output torque of the rotating electrical machine 3 such that the rotational speed of the input member 20 approaches a target rotational speed determined based on the pre-shift synchronous rotational speed. In the example shown in FIG. 6, a state is assumed in which the disengagement-side engagement device (first engagement device 11) is a friction type engagement device and positive torque which is torque in a forward acceleration direction is transmitted to the wheels 2, and thus, the control device 5 sets the above-described target rotational speed determined based on the pre-shift synchronous rotational speed to a rotational speed higher by a specified value than the pre-shift synchronous rotational speed.

In the example shown in FIG. 6, at time t12 later than time 111, the control device 5 starts preparation control for increasing the engagement pressure of the engagement-side engagement device, and thereafter, at time t13, the control device 5 starts engagement control, in other words, control to gradually increase the engagement pressure of the engagement-side engagement device. In addition, at time t13, the control device 5 starts disengagement control in which the disengagement-side engagement device is disengaged, specifically, control to gradually reduce the engagement pressure of the disengagement-side engagement device (in other words, control to gradually reduce the transmission torque of the disengagement-side engagement device). At or after time t13, with proceeding of a torque phase, the output torque of the rotating electrical machine 3 changes to reach torque determined based on a torque ratio obtained at each point in time. In FIG. 6, a case is assumed in which there is no torque difference between the output torque of the rotating electrical machine 3 and target output torque at time 114 at which the instruction value of transmission torque of the engagement-side engagement device reaches a target instruction value. In the determination as to whether the torque phase has ended at step #13 of FIG. 4, it is determined that the torque phase has ended, for example, at or after a point in time at which the instruction value of transmission torque of the engagement-side engagement device reaches the target instruction value and when a torque difference between the output torque of the rotating electrical machine 3 and the target output torque is less than or equal to a specified value.

When the torque phase has ended at time 14, the control device 5 terminates the control in which the output torque of the rotating electrical machine 3 is controlled such that the rotational speed of the input member 20 approaches the target rotational speed determined based on the pre-shift synchronous rotational speed, and starts synchronous control. When the rotational speed of the input member 20 reaches the post-shift synchronous rotational speed at time t15, the control device 5 terminates the rotational speed control on the rotating electrical machine 3 and starts torque control on the rotating electrical machine 3, and performs control to increase the engagement pressure of the engagement-side engagement device (e.g., to increase the engagement pressure to line pressure), and completes the shift speed transition at time t16.

FIG. 7 shows an example of control behavior exhibited when the control device 5 performs a shift speed transition from the second shift speed to the first shift speed in the transmission 10 shown in FIG. 2, in accordance with the processing procedure shown in FIG. 4. FIG. 7 shows, from top to bottom, a graph of input rotational speed which is the rotational speed of the input member 20, a graph of output rotational speed which is the rotational speed of the output member 30, a graph of rotating electrical machine torque which is the output torque of the rotating electrical machine 3, a graph of transmission torque of each of the engagement-side engagement device (first engagement device 11) and the disengagement-side engagement device (second engagement device 12), and a graph of engagement pressure (specifically, the instruction value of engagement pressure) of each of the engagement-side engagement device (first engagement device 11) and the disengagement-side engagement device (second engagement device 12). Here, the rotational speed represented by "1st" corresponds to a "post-shift synchronous rotational speed" and the rotational speed represented by "2nd" corresponds to a "pre-shift synchronous rotational speed".

In FIG. 7, a situation is assumed in which at a point in time earlier than time t20, the vehicle 1 is traveling, with the transmission 10 forming the second shift speed. At the point in time earlier than time t20, the control device 5 performs torque control on the rotating electrical machine 3, and the rotating electrical machine 3 is controlled to output torque (negative torque in an opposite direction to the positive torque) obtained by converting wheels' required torque to torque in the rotating electrical machine 3. When there is a request for a shift speed transition (specifically, a request for a power-off downshift) at time t20, the control device 5 starts engagement control and rotational speed control (rotational speed control on the rotating electrical machine 3) at time t20 or at a later point in time than time t20.

In the example shown in FIG. 7, the engagement pressure of the disengagement-side engagement device decreases at time t20, and the disengagement-side engagement device transitions from a direct-coupling engaged state to a slip-engaged state at time t21. The control device 5 starts rotational speed control on the rotating electrical machine 3 at time t21, and at or after time t21, the control device 5 controls the output torque of the rotating electrical machine 3 such that the rotational speed of the input member 20 approaches a target rotational speed determined based on the pre-shift synchronous rotational speed. In the example shown in FIG. 7, a state is assumed in which the disengagement-side engagement device (second engagement device 12) is a friction type engagement device and negative torque (regeneration torque) which is torque in the opposite direction to the positive torque is transmitted to the wheels 2, and thus, the control device 5 sets the above-described target rotational speed determined based on the pre-shift synchronous rotational speed to a rotational speed lower by a specified value than the pre-shift synchronous rotational speed.

In the example shown in FIG. 7, at time t22 later than time t21, the control device 5 starts preparation control for increasing the engagement pressure of the engagement-side engagement device, and thereafter, at time t23, the control device 5 starts engagement control, in other words, control to gradually increase the engagement pressure of the engagement-side engagement device. Here, with the gradual increase in the engagement pressure of the engagement-side engagement device, the absolute value of negative transmission torque of the engagement-side engagement device gradually increases. In addition, at time t23, the control device 5 starts disengagement control in which the disengagement-side engagement device is disengaged, specifically, control to gradually reduce the engagement pressure of the disengagement-side engagement device (in other words, control to gradually reduce the absolute value of negative transmission torque of the disengagement-side engagement device). Here, with the gradual reduction in the engagement pressure of the disengagement-side engagement device, the absolute value of negative transmission torque of the disengagement-side engagement device gradually decreases. At or after time t23, with proceeding of a torque phase, the output torque of the rotating electrical machine 3 changes to reach torque determined based on a torque ratio obtained at each point in time. In FIG. 7, a case is assumed in which there is no torque difference between the output torque of the rotating electrical machine 3 and target output torque at time t24 at which the instruction value of transmission torque of the engagement-side engagement device reaches a target instruction value.

When the torque phase has ended at time t24, the control device 5 terminates the control in which the output torque of the rotating electrical machine 3 is controlled such that the rotational speed of the input member 20 approaches the target rotational speed determined based on the pre-shift synchronous rotational speed, and starts synchronous control. When the rotational speed of the input member 20 reaches the post-shift synchronous rotational speed at time t25, the control device 5 terminates the rotational speed control on the rotating electrical machine 3 and starts torque control on the rotating electrical machine 3, and performs control to increase the engagement pressure of the engagement-side engagement device (e.g., to increase the engagement pressure to line pressure), and completes the shift speed transition at time t26.

As described with reference to the examples shown in FIGS. 6 and 7, when the disengagement-side engagement device is a friction type engagement device, in a state in which positive torque which is torque in the forward acceleration direction is transmitted to the wheels 2, the control device 5 sets the target rotational speed to a rotational speed higher by a specified value than the pre-shift synchronous rotational speed, and in a state in which negative torque which is torque in the opposite direction to the positive torque is transmitted to the wheels 2, the control device 5 sets the target rotational speed to a rotational speed lower by a specified value than the pre-shift synchronous rotational speed.

When the disengagement-side engagement device is a friction type engagement device, the disengagement-side engagement device is controlled to a slip-engaged state in the torque phase, by which the rotational speed of the input member 20 can be made different from the pre-shift synchronous rotational speed. In this case, the positive or negative of torque transmitted to the wheels 2 is determined based on a magnitude relationship between the rotational speed of the input member 20 and the pre-shift synchronous rotational speed. As described above, by setting the target rotational speed to a rotational speed higher by a specified value than the pre-shift synchronous rotational speed in a state in which positive torque is transmitted to the wheels 2, and setting the target rotational speed to a rotational speed lower by a specified value than the pre-shift synchronous rotational speed in a state in which negative torque is transmitted to the wheels 2, when the disengagement-side engagement device is a friction type engagement device, the target rotational speed is appropriately set based on the positive or negative of torque transmitted to the wheels 2, and in the torque phase, the output torque of the rotating electrical machine 3 can be changed in accordance with an actual change in torque ratio.

### [Other embodiments]

Next, other embodiments of the control device will be described.
(1) In the above-described embodiment, as an example, a configuration is described in which in engagement control, the control device 5 adjusts the instruction value of transmission torque of the engagement-side engagement device such that the output torque of the rotating electrical machine 3 approaches target output torque, based on a torque difference between the output torque of the rotating electrical machine 3 obtained at a point in time at which the instruction value of transmission torque of the engagement-side engagement device reaches a target instruction value determined based on target transmission torque, and the target output torque. However, the present disclosure is not limited to such a configuration, and a configuration in which the control device 5 does not make such an adjustment in the engagement control can also be adopted.
(2) The embodiments disclosed in this specification are in all respects merely illustrative, and various modifications can be made therein as appropriate without departing from the true spirit and scope of the present disclosure.

### [Summary of the present embodiment]

A summary of a control device described above will be described below.

In a control device (5) whose control target is a vehicle drive device (4) including an input member (20) that is drive-coupled to a rotating electrical machine (3); an output member (30) that is drive-coupled to a wheel (2); and a transmission (10) including a plurality of engagement devices (60) and disposed in a power transmission path between the input member (20) and the output member (30), the transmission (10) being configured to be able to form a plurality of shift speeds, when a shift speed formed by the transmission (10) is allowed to transition from a pre-shift shift speed to a post-shift shift speed by performing engagement of an engagement-side engagement device and disengagement of a disengagement-side engagement device among the plurality of engagement devices (60), a torque phase in which a torque-sharing ratio between the engagement-side engagement device and the disengagement-side engagement device changes is allowed to proceed by performing engagement control in which transmission torque of the engagement-side engagement device is allowed to gradually increase, and during proceeding of the torque phase, output torque of the rotating electrical machine (3) is controlled such that a rotational speed of the input member (20) approaches a target rotational speed determined based on a pre-shift synchronous rotational speed.

In this configuration, during proceeding of the torque phase, the output torque of the rotating electrical machine (3) is controlled such that the rotational speed of the input member (20) approaches a target rotational speed determined based on a pre-shift synchronous rotational speed. During proceeding of the torque phase, a torque ratio changes from a torque ratio determined based on a transmission gear ratio of the pre-shift shift speed to a torque ratio determined based on a transmission gear ratio of the post-shift shift speed. By controlling the output torque of the rotating electrical machine (3) in the above-described manner, the output torque of the rotating electrical machine (3) can be changed to reach torque determined based on a torque ratio obtained at each point in time. Thus, compared to a case in which the output torque of the rotating electrical machine (3) is changed at a predetermined constant change rate in the torque phase, in the torque phase, the output torque of the rotating electrical machine (3) is easily changed in accordance with an actual change in torque ratio.

Here, it is preferred that the disengagement-side engagement device be a mesh type engagement device, and the target rotational speed be allowed to match the pre-shift synchronous rotational speed.

When the disengagement-side engagement device is a mesh type engagement device, the disengagement-side engagement device remains in an engaged state during a period before the disengagement-side engagement device is disengaged at the end of the torque phase. According to this configuration, when the disengagement-side engagement device is a mesh type engagement device, the target rotational speed is appropriately set, and in the torque phase, the output torque of the rotating electrical machine (3) can be changed in accordance with an actual change in torque ratio.

In addition, it is preferred that the disengagement-side engagement device be a friction type engagement device, and in a state in which positive torque which is torque in a forward acceleration direction is transmitted to the wheel (2), the target rotational speed be set to a rotational speed higher by a specified value than the pre-shift synchronous rotational speed, and in a state in which negative torque which is torque in an opposite direction to the positive torque is transmitted to the wheel (2), the target rotational speed be set to a rotational speed lower by a specified value than the pre-shift synchronous rotational speed.

When the disengagement-side engagement device is a friction type engagement device, the rotational speed of the input member (20) can be made different from the pre-shift synchronous rotational speed by controlling the disengagement-side engagement device to a slip-engaged state in the torque phase. In this case, the positive or negative of torque transmitted to the wheel (2) is determined based on a magnitude relationship between the rotational speed of the input member (20) and the pre-shift synchronous rotational speed. According to this configuration, when the disengagement-side engagement device is a friction type engagement device, the target rotational speed is appropriately set based on the positive or negative of torque transmitted to the wheel (2), by which in the torque phase, the output torque of the rotating electrical machine (3) can be changed in accordance with an actual change in torque ratio.

In addition, it is preferred that in the engagement control, transmission torque of the engagement-side engagement device be allowed to gradually increase toward target transmission torque for allowing torques transmitted from the rotating electrical machine (3) to the wheel (2) before and after a transition from the pre-shift shift speed to the post-shift shift speed to be equal to each other, and with torque, which is obtained by converting the target transmission torque to torque in the rotating electrical machine (3), being target output torque, in the engagement control, an instruction value of transmission torque of the engagement-side engagement device be adjusted such that output torque of the rotating electrical machine (3) approaches the target output torque, based on a torque difference between output torque of the rotating electrical machine (3) obtained at a point in time at which an instruction value of transmission torque of the engagement-side engagement device reaches a target instruction value determined based on the target transmission torque, and the target output torque.

In the control device (5) of the present disclosure, during proceeding of the torque phase, the output torque of the rotating electrical machine (3) is controlled such that the rotational speed of the input member (20) approaches a target rotational speed determined based on the pre-shift synchronous rotational speed. Hence, the output torque of the rotating electrical machine (3) at a point in time at which the instruction value of transmission torque of the engagement-side engagement device reaches the target instruction value is torque based on actual transmission torque of the engagement-side engagement device obtained at the point in time, and when the actual transmission torque of the engagement-side engagement device at this point in time differs from the target transmission torque, a torque difference based on a difference between these two transmission torques occurs between the output torque of the rotating electrical machine (3) and the target output torque. According to this configuration, deviation between the actual transmission torque of the engagement-side engagement device and the target transmission torque is grasped based on the torque difference, and the instruction value of transmission torque of the engagement-side engagement device can be adjusted such that the actual transmission torque of the engagement-side engagement device approaches the target transmission torque.

In the above-described configuration, it is preferred that in the engagement control, the target instruction value be adjusted based on the torque difference obtained in the past engagement control.

According to this configuration, by learning past shift behavior, the target instruction value can be adjusted such that the actual transmission torque of the engagement-side engagement device obtained at a point in time at which the instruction value of transmission torque of the engagement-side engagement device reaches the target instruction value approaches the target transmission torque.

The control device according to the present disclosure can provide at least one of the above-described advantageous effects.

### REFERENCE SIGNS LIST

2: Wheel, 3: Rotating electrical machine, 4: Vehicle drive device, 5: Control device, 10: Transmission, 20: Input member, 30: Output member, and 60: Engagement device

## Claims

1. A control device whose control target is a vehicle drive device including an input member that is drive-coupled to a rotating electrical machine; an output member that is drive-coupled to a wheel; and a transmission including a plurality of engagement devices and disposed in a power transmission path between the input member and the output member, the transmission being configured to be able to form a plurality of shift speeds,
wherein
when a shift speed formed by the transmission is allowed to transition from a pre-shift shift speed to a post-shift shift speed by performing engagement of an engagement-side engagement device and disengagement of a disengagement-side engagement device among the plurality of engagement devices, a torque phase in which a torque-sharing ratio between the engagement-side engagement device and the disengagement-side engagement device changes is allowed to proceed by performing engagement control in which transmission torque of the engagement-side engagement device is allowed to gradually increase, and
during proceeding of the torque phase, output torque of the rotating electrical machine is controlled such that a rotational speed of the input member approaches a target rotational speed determined based on a pre-shift synchronous rotational speed.

2. The control device according to claim 1, wherein
the disengagement-side engagement device is a mesh type engagement device, and
the target rotational speed is allowed to match the pre-shift synchronous rotational speed.

3. The control device according to claim 1, wherein
the disengagement-side engagement device is a friction type engagement device, and
in a state in which positive torque is transmitted to the wheel, the target rotational speed is set to a rotational speed higher by a specified value than the pre-shift synchronous rotational speed, and in a state in which negative torque is transmitted to the wheel, the target rotational speed is set to a rotational speed lower by a specified value than the pre-shift synchronous rotational speed, the positive torque being torque in a forward acceleration direction, and the negative torque being torque in an opposite direction to the positive torque.

4. The control device according to any one of claims 1 to 3, wherein
in the engagement control, transmission torque of the engagement-side engagement device is allowed to gradually increase toward target transmission torque for allowing torques transmitted from the rotating electrical machine to the wheel before and after a transition from the pre-shift shift speed to the post-shift shift speed to be equal to each other, and
with torque being target output torque, the torque being obtained by converting the target transmission torque to torque in the rotating electrical machine,
in the engagement control, an instruction value of transmission torque of the engagement-side engagement device is adjusted such that output torque of the rotating electrical machine approaches the target output torque, based on a torque difference between output torque of the rotating electrical machine obtained at a point in time at which an instruction value of transmission torque of the engagement-side engagement device reaches a target instruction value determined based on the target transmission torque, and the target output torque.

5. The control device according to claim 4, wherein in the engagement control, the target instruction value is adjusted based on the torque difference obtained in the past engagement control.
